# EUROPEAN PATENT APPLICATION

(11) **EP 4 776 567 A1**
(43) Date of publication of application: **15.07.2026**
(21) Application number: 25150695.2
(22) Date of filing: 08.01.2025
(51) Int. Cl.: H04L 9/40

(54) **PREVENTING NETWORK SECURITY THREATS**

(71) Applicant: MasterCard International Incorporated, Purchase, NY 10577 (US)
(72) Inventor: Lundgren, Pär, Östersund (SE); Mellberg, Linus, Järfälla (SE); Damour, Gabriel, Paris (FR)
(74) Representative: Barker Brettell LLP

(57) **Abstract**

The present invention relates to a computer implemented method 500 for preventing a security threat in a computing network. The method comprises receiving 501 a data packet originating associated with an autonomous system number (ASN) and determining 503 if the ASN is in a list of stored ASNs, wherein the list of stored ASNs comprises ASNs each associated with a previous data packet received by the computer network. If the received ASN is not in the list, the method further comprises blocking (505) the received data packet from being sent to the destination IP address in the computer network.

## Description

### Field

The present invention relates to methods, servers and systems for preventing a security threat in a computing network. In particular, the method and systems allow for a data packet associated with a network security threat received by a threat protection server to be blocked from accessing the computer network.

### Background

With developments in malicious network technology, the challenges faced by network security systems to prevent network security attacks are becoming increasingly difficult. Network security systems must analyse the incoming traffic and ensure that this data will not result in a security threat to the computer network in which it is being received.

Current systems offer different techniques for determining whether the incoming data traffic is malicious. Common among these methods is to determine an IP address in which the received data originates. From this IP address information regarding the source of the incoming data can then be determined. However, with the scale and speed of current network security threats, analysing each incoming IP address is computationally demanding and, inevitably, malicious data is missed by network security systems, causing network security attacks to occur at intended destinations.

Therefore, there is a need to more accurately and more efficiently prevent any incoming network security threats to a computing network. The present invention sets out to achieve this and alleviate the problems relating to network security and threat prevention.

### Summary of Invention

According to an aspect of the present invention there is provided a computer implemented method for preventing a security threat in a computing network, the method comprising: receiving, at a threat protection server, a data packet, wherein the data packet is associated with an autonomous system number (ASN) and specifies a destination IP address in a computer network; determining, at the threat protection server, if the ASN is in a list of stored ASNs, wherein the list of stored ASNs comprises ASNs each associated with a previous data packet received by the computer network; and if the received ASN is not in the list, the method further comprises: blocking, at the threat protection server, the received data packet from being sent to the destination IP address in the computer network.

Advantageously, this method allows for an improved detection and prevention of computer network security threats. The method determines an autonomous system number (ASN) associated with a received data packet and blocks the data packet if it is not already stored in a list of ASNs associated with data packets already received by the computer network. In this way, a large number of potentially problematic data packets associated with one another (through having the same ASN), are blocked from accessing the computer network by the threat protection server, without having to look up and block each individual data packet based on an IP address alone. This improves the prevention rate of network security threats, as individual IP address do not need to be monitored, and instead ASNs are monitored. This also reduces the computational resources required to prevent network security threats, which in turn increases the capacity of a threat protection server in blocking and preventing further security threats and attack.

The data packet received may relate to internet traffic accessing a web application maintained by the computer network. When a computer or computing device accesses a web application, a data packet is sent from the device to the network maintaining the web application. Internet traffic from devices may attempt to access a computer network through a web application, as data packets from said devices are sent to the computer network maintaining the web application.

The ASNs stored in the list of ASNs may be any ASNs associated with any previously received data packets that did not cause a network security threat to a computing network. In this way, prior to receiving the data packet, the same computing network may have previously received other, earlier data packets, which did not cause a network security threat to said computer network, and therefore the ASNs of these earlier data packets are stored in the list of ASNs.

An autonomous system is a collection of connected IP routing prefixes under the control of one or more network operators on behalf of a single administrative entity or domain. Each IP address, including the previously stored IP address, the detected IP address, and the one or more further IP addresses, that is associated with the same autonomous system has the same ASN.

Preferably, the data packet may originate from a source IP address, and the method may further comprise determining, at the threat protection server, the ASN associated with the source IP address. In this way, the ASN associated with the received data packet can be determined based on the source IP address of the data packet.

Internet traffic from devices may attempt to access a computer network through a web application, as data packets from said devices are sent to the computer network maintaining the web application. The data packet may originate from a network and/or associated device with the source IP address. The source IP address from which the detected traffic comprising the data packets originates is the IP address associated with this network and/or assigned to this device.

Preferably, the determining, at the threat protection server, the ASN associated with the source IP address may comprise: accessing an ASN database, wherein the ASN database is a public database maintained externally to the threat protection server; and determining, at the threat protection server, the ASN stored in the ASN database in association with the source IP address. In this way, the method allows a publicly known ASN for the source IP address to be easily determined by the threat protection server. Therefore, as the data packet is received by the threat protection server, it may easily determine from the ASN database, the ASN known to be associated with the source IP address of the data packet.

The ASN database is preferably a publicly available database, that any entity can access regarding which IP addresses are associated with which ASNs. Alternatively, the ASN database may be a public database maintained by the threat protection server and/or the computer network, or it may be a private database maintained by the threat protection server and/or the computer network, not available for public use.

Preferably, the data packet associated with the ASN may be a second data packet, and the method may further comprise: receiving, at the threat protection server, a first data packet associated with an ASN, wherein the first data packet is received at an earlier point in time to receiving the second data packet; sending, from the threat protection server, the first data packet to a destination IP address associated with the first data packet; determining, at the threat protection sever, that the first data packet did not cause a network security threat when received at its destination IP address; and storing, in the list of stored ASNs, the ASN associated with the first data packet. Advantageously, this allows for the threat protection server to determine that a data packet with an associated ASN did not cause a network security threat, to then store in a list of ASNs that said ASN is not malicious nor is it related to a previous network security threat. Therefore, as a new incoming data packet is received with the same associated ASN, the threat protection server may determine if the ASN is known to have previously accessed the computer network, and if it is not, block the incoming data packet from reaching its intended destination IP address.

Preferably, the method may further comprise: receiving, at the threat protection server, a plurality of further data packets each associated with an ASN within a predetermined time period, wherein each of the further data packets are received at an earlier point in time to receiving the data packet; sending, from the threat protection server, each of the further data packets to a destination IP address associated with each further data packet; determining, at the threat protection server, if any of the data packets sent to their specified destination IP addresses caused a network security threat when received by the computer network; and storing, in the list of ASNs, an ASN associated with each further data packet that did not cause a network security threat.

Advantageously, this allows for data packets to be received by the computer network within a set time period, such that sufficient data regarding ASNs may be collected and stored in the list of ASNs. This ensures, that as a later data packet is received, it is checked against a list of ASNs known to have previously accessed the computer network, such that detection of any data packets with unknown ASNs is improved. Each of the further data packets are received at an earlier point in time to receiving the data packet which is blocked by the threat protection server, if it is determined to be associated with an ASN stored in the list of ASNs.

Preferably, the method may further comprise: determining, at the threat protection server, a distribution of the received further data packets that did not cause a network security threat; and the step of determining, at the threat protection server, if the ASN is in the list of stored ASNs may comprise: determining, at the threat protection server, if the ASN associated with the data packet is an anomaly with respect to the distribution of ASNs that were received by the computer network and did not cause a network security threat. This allows for a distribution to be built up consisting of ASNs associated with the data packets received by the computer network within the predetermined time period, such that any anomaly with respect to the distribution can be detected and as such blocked from accessing the computer network and causing a network security threat.

Preferably, the method may further comprise: determining, at the threat protection server, the ASN associated with the data packet; comparing, at the threat protection server, the ASN associated with the data packet to each of the ASNs stored in the list of ASNs; and determining, at the threat protection server, if the ASN associated with the data packet is the same as one of the ASNs stored in the list of ASNs. In this way, the threat protection server is able to determine that the ASN associated with the data packet is the same as an ASN associated with a data packet already received by the computer network and store in the list of ASNs by comparing the ASN of the received data packet to those in the list of ASNs. This allows the threat protection server to block the data packet based on whether it has the same ASN as a known data packet.

Preferably, the list of stored ASNs may be stored in an ASN database maintained by the threat protection server. Advantageously, this allows for the threat protection server to generate and maintain its own unique database of ASNs known to be safe and have previously accessed the computer network. Alternatively, the list of ASNs may be stored in a database maintained by the computer network or an external database to the threat protection server and computer network. The list of ASNs may be generated and stored by a third party in a third-party database, in which the threat protection server and computer network are granted access to.

Preferably, the method may further comprise, if the ASN is in the list of stored ASNs: sending, from the threat protection server, the data packet to the destination IP address associated with the data packet. This allows for the threat protection server to easily determine if an incoming data packet is secure and will not cause a network security threat, based on a previous data packet with the same ASN as that associated with the data packet already having accessed the computer network (and thus stored in the list of ASNs).

Preferably, the computer network may maintain a web application, and the data packet is received by the threat protection server as the data packet attempts to access the web application. In this way, the threat protection server detects internet traffic, in the form of data packets, accessing a web application maintained by the computer network, and therefore accessing the computer network through the web application.

Preferably, the web application may be a first web application, and the threat protection server may maintain one or more further web applications imitating the first web application, and the method may further comprise: receiving, at the threat protection server, an additional data packet attempting to access the one or more imitation web applications; determining, at the threat protection server, that the additional data packet is attempting to cause a network security threat to the computer network; determining, at the threat protection server, an ASN of the additional data packet; and storing, in an additional list of ASNs, the additional data packet, wherein the additional list of ASNs comprises a list of ASNs each relating to a data packet that has accessed the computer network and was associated with a network security threat.

Advantageously, this allows the threat protection server to maintain fake or imitation web applications designed to attract network security threats from malicious sources. Therefore, the computer network and threat protection server may learn more ASNs that are malicious and associated with network security threats. This allows the threat protection server to store a more extensive ASN database including ASNs that are known to cause network security threats.

Preferably, the data packet may be received by the threat protection server from a router associated with the threat protection sever. The network security threat prevented by the threat protection server may be a threat of a denial-of-service attack, and/or a distributed denial-of-service attack and/or a phishing attack and/or a malware attack. A previous network security threat may be a threat of a denial-of-service attack, and/or a distributed denial-of-service attack and/or a phishing attack and/or a malware attack.

According to a further aspect of the present invention there is provided a threat protection server for preventing a security threat in a computing network, the threat protection server comprising a processor configured to carry out the method steps of: receiving, at a threat protection server, a data packet, wherein the data packet is associated with an autonomous system number (ASN) and specifies a destination IP address in a computer network; determining, at the threat protection server, if the ASN is in a list of stored ASNs, wherein the list of stored ASNs comprises ASNs each associated with a previous data packet received by the computer network; and if the received ASN is not in the list, the method further comprises: blocking, at the threat protection server, the received data packet from being sent to the destination IP address in the computer network.

The threat protection server may be configured to perform the method of the above aspect.

According to a further aspect of the present invention there is provided a system for preventing security a security threat in a computing network, the system comprising a threat protection server and the computing network, wherein the threat protection server comprises a processor configured to carry out the method steps of: receiving, at a threat protection server, a data packet, wherein the data packet is associated with an autonomous system number (ASN) and specifies a destination IP address in a computer network; determining, at the threat protection server, if the ASN is in a list of stored ASNs, wherein the list of stored ASNs comprises ASNs each associated with a previous data packet received by the computer network; and if the received ASN is not in the list, the method further comprises: blocking, at the threat protection server, the received data packet from being sent to the destination IP address in the computer network.

The threat protection server of the system may be configured to perform the method of the above aspects.

According to a further aspect of the present invention there is provided a non-transitory computer-readable medium comprising instructions which, when executed by a computer, cause the computer to carry out the steps of: receiving, at a threat protection server, a data packet, wherein the data packet is associated with an autonomous system number (ASN) and specifies a destination IP address in a computer network; determining, at the threat protection server, if the ASN is in a list of stored ASNs, wherein the list of stored ASNs comprises ASNs each associated with a previous data packet received by the computer network; and if the received ASN is not in the list, the method further comprises: blocking, at the threat protection server, the received data packet from being sent to the destination IP address in the computer network.

The non-transitory computer-readable medium may comprise instructions which, when executed by a computer, cause the computer to carry out the method steps of the further above aspects.

According to a further aspect of the present invention there is provided a computer program product comprising instructions which, when the program is executed by a computer, cause the computer to carry out the steps of: receiving, at a threat protection server, a data packet, wherein the data packet is associated with an autonomous system number (ASN) and specifies a destination IP address in a computer network; determining, at the threat protection server, if the ASN is in a list of stored ASNs, wherein the list of stored ASNs comprises ASNs each associated with a previous data packet received by the computer network; and if the received ASN is not in the list, the method further comprises: blocking, at the threat protection server, the received data packet from being sent to the destination IP address in the computer network.

The computer program product may comprise instructions which, when executed by a computer, cause the computer to carry out the method steps of the above aspects.

According to a further aspect there is provided a computer implemented method for preventing a security threat in a computing network, the method comprising: receiving, at a threat protection server, a data packet originating from a source IP address, wherein the data packet specifies a destination IP address in a computer network; determining, at the threat protection server, if the source IP address is in a list of stored IP addresses, wherein the list of stored IP addresses comprises IP addresses each associated with a previous network security threat; and if the source IP address is in the list, the method further comprises: blocking, at the threat protection server, the data packet from being sent to the destination IP address; determining, at the threat protection server, an autonomous system number (ASN) associated with the source IP address; receiving, at the threat protection server, a further data packet originating from a further source IP address associated with the same ASN that was associated with the source IP address, wherein the further data packet specifies a further destination IP address in the computing network; and blocking, at the threat protection server, as a result of the further data packet from the further source IP address being associated with the same ASN that was associated with the source IP address, the further data packet from being sent to the further destination IP address.

Advantageously, this method allows for an improved detection and prevention of computer network security threats. The method determines an autonomous system number (ASN) associated with the IP address and blocks each further detected IP address that is associated with the same ASN. In this way, a large number of potentially problematic IP addresses associated with one another (through having the same ASN), are blocked from accessing the computer network by the threat protection server, without having to look up and block each individual IP address based on IP address alone. This improves the prevention rate of network security threats, as individual IP address do not need to be monitored, and instead ASNs are monitored. This also reduces the computational resources required to prevent network security threats, which in turn increases the capacity of a threat protection server in blocking and preventing further security threats and attack.

The data packet received may relate to internet traffic accessing a web application maintained by the computer network. When a computer or computing device accesses a web application, a data packet is sent from the device to the network maintaining the web application. Internet traffic from devices may attempt to access a computer network through a web application, as data packets from said devices are sent to the computer network maintaining the web application. The data packet may originate from a network and/or associated device with the source IP address. The source IP address from which the detected traffic comprising the data packets originates is the IP address associated with this network and/or assigned to this device.

The IP addresses associated with a previous network security threat may be any previously received data packets that had caused a network security threat to a computing network. The stored list of IP addresses known to be associated with network security threats may have been previously detected for the same computing network in which the new data packets were received in relation to, or it may have been another unrelated computer network. In this way, prior to receiving the data packet, the same computing network may have previously received other, earlier data packets, which caused a network security threat to said computer network, and therefore the source IP addresses of these earlier data packets are stored in the list of IP addresses. Alternatively, the data packets may have been previously received at any other computer network and caused a threat, and not specifically the computer network in which the newly received data packets are attempting to access, and thus the list of stored IP address may reflect IP addresses associated with earlier data packets received at any number of different computer networks. The previous network security threat may be a threat of an attack or a threat which resulted in an attack.

In some arrangements, the further source IP address is different to the source IP address of the first received data packet. However, in other arrangements it may be the same IP address. The further destination IP address may be the same IP address as the destination IP address specified by the first received data packet. Alternatively, the destination IP addresses may be different, provided that both are IP addresses within the same computer network.

Preferably, determining, at the threat protection server, the ASN associated with the source IP address may comprise: accessing an ASN database, wherein the ASN database is a public database maintained externally to the threat protection server; and determining, at the threat protection server, the ASN stored in the ASN database in association with the source IP address.

Preferably, the data packet originating from the source ID address may be a second data packet, and the method may further comprise: receiving, at the threat protection server, a first data packet originating from the source IP address, wherein the first data packet is received at an earlier point in time to receiving the second data packet; sending, from the threat protection server, the first data packet to a destination IP address associated with the first data packet; determining, at the threat protection sever, that the first data packet caused a network security threat when received at its destination IP address; and storing, in the list of stored IP addresses, the source IP address associated with the first data packet. Advantageously, this allows for the threat protection server to determine that a data packet originating from a source IP address caused a network security threat, to then store in a list of IP addresses that said source IP address is malicious and related to a previous network security threat. Therefore, as a new incoming data packet is received from the same source IP address, the threat protection server may determine that the source IP address is associated with a previous network security threat and may block the newly received data packet from reaching its intended destination IP address. In the case where the data packet is the second data packet, the further data packet received may be a third data packet.

Preferably, the method may further comprise: determining, at the threat protection server, the ASN associated with the received further data packet, wherein the determining of the ASN comprises: accessing an ASN database, wherein the ASN database is a public database maintained externally to the threat protection server; and determining, at the threat protection server, the ASN stored in the ASN database in association with the further source IP address. This allows for the threat protection server to determine the ASN from the ASN database for any further received IP address. Therefore, instead of having to review each and every source IP address to determine whether the each of the IP addresses has been associated with a previous network security threat, the threat protection server only has to determine the ASN stored in the ASN database and block the data packet based on its ASN. This improves the rate and accuracy in which the threat protection server blocks malicious data packets. For example, a source IP address may have not been involved in a security threat previously, and therefore would not be detected if only the IP addresses were considered. However, in the present method the same source IP address if it were associated with an IP address which had previously been linked to a network security threat by having the same ASN, would be detected and blocked by the threat protection server using the ASN database and by considering the ASN of the received data packet, rather than solely relying on the source IP address itself.

Preferably, the method may further comprise: determining, at the threat protection server, the ASN associated with the received further data packet; comparing, at the threat protection server, the ASN associated with the further data packet to the ASN associated with the data packet; and determining, at the threat protection server, if the ASN associated with the further data packet is the same as the ASN associated with the data packet. In this way, the threat protection server is able to determine that the ASN associated with the source IP address of the further data packet is the same as the ASN associated with the source IP address of the data packet. This allows the threat protection server to block the further data packet based on whether it has the same ASN as a known data packet from a malicious IP address.

Preferably, the list of stored IP addresses each associated with the previous network security threat may comprise IP addresses associated with a previous network security threat to the computer network.

In this way, only previous IP addresses known to have caused a security threat to the computer network in question are stored in the list. This allows for the threat protection server to more efficiently determine whether the received IP address is associated with a network security threat known to the specific computer network, rather than any IP address associated with network security threats of any computer network.

Alternatively, the list of stored IP addresses may comprise IP addresses associated with previous network security threats to a computer network different than the computer network receiving the data packet and further data packet.

Preferably, the list of stored IP addresses may be stored in an IP address database maintained by the threat protection server.

Advantageously, this allows for the threat protection server to generate and maintain a unique database of IP address known to be involved in network security threats. Alternatively, the list of IP addresses may be stored in a database maintained by the computer network or an external database to the threat protection server and computer network. The list of IP addresses may be generated and stored by a third party in a third-party database, in which the threat protection server and computer network are granted access to.

Preferably, the method may further comprise: storing a further list of IP addresses comprising one or more IP addresses, wherein each of the one or more IP addresses in the further list of IP address relate to a data packet that has previously accessed the computer network and not been associated with a network security threat. This allows for the threat protection server to maintain a list of IP addresses related to data packets previously accessing the computer network, that are not associated with network security threat as well as those that are associated with network security threats. This allows the threat protection server to easily determine if an incoming IP address is secure and will not cause a network security threat.

The further list of IP addresses may be stored in the IP address database maintained by the threat protection server or by the computer network. Alternatively, the further list of IP addresses may be stored in a different database maintained by the threat protection server or the computer network to the list of IP addresses associated with previous network security threats.

Preferably, the method may further comprise: determining, at the threat protection server, if the source IP address is in the further list of stored IP addresses; and if the source IP address is in the further list, the method further comprises: sending, from the threat protection server, the data packet to the destination IP address associated with the data packet; determining, at the threat protection server, an ASN associated with the source IP addresses; and receiving, at the threat protection server, the further data packet originating from the further source IP address associated with the ASN, wherein the further data packet specifies the further destination IP address in the computing network; and sending, to the further destination IP address, the further received data packet originating from the further source IP address associated with the ASN. This allows for the threat protection server to determine if the received data packet and associated source addresses is known to be safe and will not cause a network security threat. Therefore, the threat protection server may then send the data packet to its destination IP address within the computer network. The threat protection server may also determine the ASN associated with the source IP address, such that any further data packets with further source IP addresses with the same ASN may also automatically be sent through the threat protection server into the computer network.

Preferably, the computer network may maintain a web application, and the data packet may be received by the threat protection server as the data packet originating from the source IP attempts to access the web application.

Preferably, the web application may be a first web application, and the threat protection server may maintain one or more further web applications imitating the first web application, and wherein the method may further comprise: receiving, at the threat protection server, an additional data packet originating from a source IP address attempting to access the one or more imitation web applications; determining, at the threat protection server, that the additional data packet is attempting to cause a network security threat to the computer network; and storing, in the list of stored IP addresses, the additional data packet.

Advantageously, this allows the threat protection server to maintain fake or imitation web applications designed to attract network security threats from malicious sources. Therefore, the computer network and threat protection server may learn more source IP addresses that are malicious and associated with network security threats. This allows the threat protection server to store a more extensive IP address database of malicious source IP addresses.

Preferably, the data packet may be received by the threat protection server from a router associated with the threat protection sever.

According to a further aspect of the present invention there is provided a threat protection server for preventing a security threat in a computing network, the threat protection server comprising a processor configured to carry out the method steps of: receiving, at a threat protection server, a data packet originating from a source IP address, wherein the data packet specifies a destination IP address in a computer network; determining, at the threat protection server, if the source IP address is in a list of stored IP addresses, wherein the list of stored IP addresses comprises IP addresses each associated with a previous network security threat; and if the source IP address is in the list, the method further comprises: blocking, at the threat protection server, the data packet from being sent to the destination IP address; determining, at the threat protection server, an autonomous system number (ASN) associated with the source IP address; receiving, at the threat protection server, a further data packet originating from a further source IP address associated with the same ASN that was associated with the source IP address, wherein the further data packet specifies a further destination IP address in the computing network; and blocking, at the threat protection server, as a result of the further data packet from the further source IP address being associated with the same ASN that was associated with the source IP address, the further data packet from being sent to the further destination IP.

The threat protection server may be configured to perform the method of the above aspect.

According to a further aspect of the present invention there is provided a system for preventing a security threat in a computing network, the system comprising a threat protection server and the computing network, wherein the threat protection server comprises a processor configured to carry out the steps of: receiving, at a threat protection server, a data packet originating from a source IP address, wherein the data packet specifies a destination IP address in a computer network; determining, at the threat protection server, if the source IP address is in a list of stored IP addresses, wherein the list of stored IP addresses comprises IP addresses each associated with a previous network security threat; and if the source IP address is in the list, the method further comprises: blocking, at the threat protection server, the data packet from being sent to the destination IP address; determining, at the threat protection server, an autonomous system number (ASN) associated with the source IP address; receiving, at the threat protection server, a further data packet originating from a further source IP address associated with the same ASN that was associated with the source IP address, wherein the further data packet specifies a further destination IP address in the computing network; and blocking, at the threat protection server, as a result of the further data packet from the further source IP address being associated with the same ASN that was associated with the source IP address, the further data packet from being sent to the further destination IP.

The system may be configured to perform the method of the above aspect.

According to a further aspect of the present invention there is provided a non-transitory computer-readable medium comprising instructions which, when executed by a computer, cause the computer to carry out the steps of: receiving, at a threat protection server, a data packet originating from a source IP address, wherein the data packet specifies a destination IP address in a computer network; determining, at the threat protection server, if the source IP address is in a list of stored IP addresses, wherein the list of stored IP addresses comprises IP addresses each associated with a previous network security threat; and if the source IP address is in the list, the method further comprises: blocking, at the threat protection server, the data packet from being sent to the destination IP address; determining, at the threat protection server, an autonomous system number (ASN) associated with the source IP address; receiving, at the threat protection server, a further data packet originating from a further source IP address associated with the same ASN that was associated with the source IP address, wherein the further data packet specifies a further destination IP address in the computing network; and blocking, at the threat protection server, as a result of the further data packet from the further source IP address being associated with the same ASN that was associated with the source IP address, the further data packet from being sent to the further destination IP.

The non-transitory computer-readable medium may comprise instructions which, when executed by a computer, cause the computer to carry out the method steps of the further above aspect.

According to a further aspect of the present invention there is provided a computer program product comprising instructions which, when the program is executed by a computer, cause the computer to carry out the steps of receiving, at a threat protection server, a data packet originating from a source IP address, wherein the data packet specifies a destination IP address in a computer network; determining, at the threat protection server, if the source IP address is in a list of stored IP addresses, wherein the list of stored IP addresses comprises IP addresses each associated with a previous network security threat; and if the source IP address is in the list, the method further comprises: blocking, at the threat protection server, the data packet from being sent to the destination IP address; determining, at the threat protection server, an autonomous system number (ASN) associated with the source IP address; receiving, at the threat protection server, a further data packet originating from a further source IP address associated with the same ASN that was associated with the source IP address, wherein the further data packet specifies a further destination IP address in the computing network; and blocking, at the threat protection server as a result of the further data packet from the further source IP address being associated with the same ASN that was associated with the source IP address, the further data packet from being sent to the further destination IP.

The computer program product may comprise instructions which, when executed by a computer, cause the computer to carry out the method steps of the above further aspect.

### Description of Figures

Figure 1 shows a schematic diagram of a communication system comprising a threat protection system and a computer network, according to an embodiment of the invention;
Figure 2 shows a schematic block diagram of the communication system comprising the threat protection system and the computer network, as shown in Figure 1, for preventing a security threat in the computing network based on an autonomous system number of an incoming data packet;
Figure 3 shows a schematic block diagram of the system, as shown in Figures 1 and 2, for preventing a security threat in the computing network based on an autonomous system number of an incoming data packet;
Figure 4 shows a method sequence diagram for preventing a security threat in the computing network, as shown in Figures 1 to 3;
Figure 5 shows a flow diagram of a computer implemented method for preventing a security threat in a computing network, as shown in Figures 1 to 4;
Figure 6 shows a schematic diagram of a communication system comprising a threat protection system and a computer network, according to an alternative embodiment of the present invention;
Figure 7 shows a schematic block diagram of the system comprising the threat protection system and the computer network, as shown in Figure 6, for preventing a security threat in the computing network based on an autonomous system number of an incoming data packet;
Figure 8 shows a schematic block diagram of the system, as shown in Figures 6 and 7, for preventing a security threat in the computing network based on an autonomous system number of an incoming data packet;
Figure 9 shows a schematic block diagram of the system, as shown in Figures 6 to 8, for preventing a security threat in the computing network based on a source IP address of an incoming data packet known to be secure;
Figure 10 shows a method sequence diagram for preventing a security threat in the computing network, according to the embodiment as shown in Figures 6 to 9;
Figure 11 shows a flow diagram of a computer implemented method for preventing a security threat in a computing network, according to the embodiment as shown in Figures 6 to 10; and
Figure 12 shows a data processing device for use with the system shown in Figures 1 to 5 and the system shown in Figures 6 to 11, according to aspects of the present invention.

### Detailed Description

The present disclosure relates to methods, servers, and systems for preventing a security threat in a computing network. The system is configured to perform a method to detect any incoming fraudulent internet traffic and block the internet traffic from accessing the computer network. The method also involves the blocking of any further detected internet traffic related to the same malicious source as the initially detected fraudulent internet traffic.

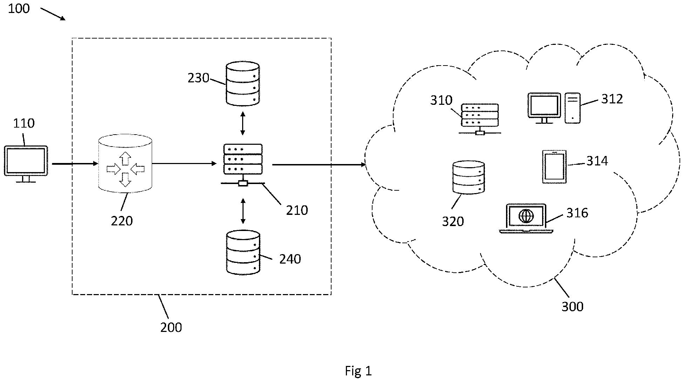

Figure 1 shows a schematic diagram of a communication system 100 for preventing a security threat in a computing network 300, in accordance with an embodiment of the present invention. The system 100 includes a threat protection system 200 and the computer network 300.

The threat protection system 200 includes a threat protection server 210, a network router 220 and local database 230. The threat protection server 210 is in direct communication with the router 220 and maintains the local database 230. The threat protection server 210 is also in communication with an external database 240. The external database 240 is a part of the threat protection system 200 but is external to the threat protection server 210, and thus is not maintained by the threat protection server 210.

The threat protection server 210, router 220 and local database 230 are maintained by a threat protection provider. Alternatively, the threat protection server 210, router 220 and local database 230 may be maintained by another entity, external to the threat protection provider.

The system 100 also includes a computer network 300 in communication with the threat protection server 210. The computer network is a network of computers and servers sharing resources and wired or wirelessly digitally communicating with one another. The computer network 300 includes servers 310, databases 320, and a plurality of devices such as computers 312, mobile phone devices 314, laptops 316 and any other device connected to the computer network 300. The servers 310 of the computer network 300 also maintain one or more web applications and/or web pages across any number of websites. The computer network 300 includes the above assets which are to be protected by the threat protection server 210.

A device 110 external to the computer network 300 aims to access the computer network 300. The device 110 may be an individual device accessing the computer network 300 or it may be an external network of devices accessing the computer network 300. The device 110 accesses the computer network 300 through a web application ran by the servers 310 of the computer network 300. In this way, the device 110 aims to access the computer network 300 as internet traffic accessing the web application maintained by the computer network 300. As the device accesses the web application, data packets are sent from the device to the computer network maintaining the web application. The data packets being sent and received is what constitutes the internet traffic trying to access the web application.

As shown in Figure 1, the system 100 includes the threat protection system 200, which first receives the internet traffic from the device 110 trying to access the computer network 300 before it is permitted to access the network 300. As will be described in detail below, the threat protection system 200 determines whether the internet traffic received is sent from a device 110 with malicious intent, for example from a fraudster accessing a web application in order to access private data stored by devices of computer network 300. If it is determined that the internet traffic accessing the computer network 300 is from a malicious source, the threat protection system 200 proceeds to block the traffic from accessing the computer network 300. In this way, the threat protection system 200 protects the devices 312, 314, 316, servers 310, and databases 320 of the computer network 300 against network security threats and attacks.

The threat protection system 200 protects the computer network 300 from network security threats such as a denial-of-service attack, or a distributed denial-of-service attack or a phishing attack or a malware attack.

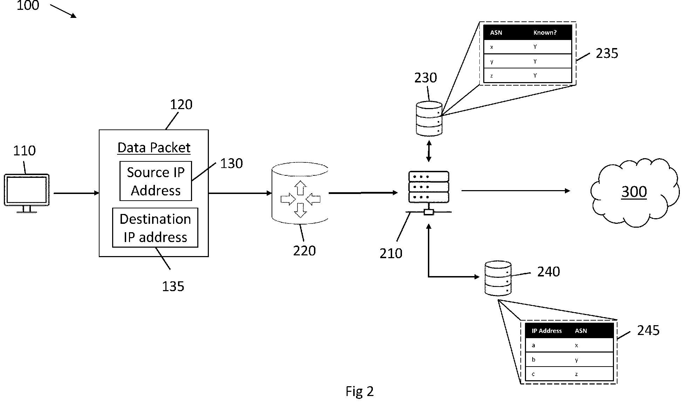

Figure 2 shows a schematic block diagram of the system 100 shown in Figure 1 for preventing a security threat in the computer network 300, based on an autonomous system number (ASN) of an incoming data packet. As described above in relation to Figure 1, the device 110 attempts to access the computer network 300 via an asset, such as a web application, maintained by the computer network 300.

In attempting to access the computer network 300, a data packet 120 is sent from the device 110 to the router 220 of the threat protection system 200. The data packet 120 indicates a source IP address 130 and a destination IP address 135 of the internet traffic originating from the device 110. Any device or network connected to the internet has an internet protocol (IP) address. An IP address is a unique identifying number assigned to every device and/or network. Therefore, the data packet 120 received at the router 220 indicates the source IP address 130 of a source of the data packet 120, which in this case is the IP address of the device 110.

The data packet 120 indicates a destination IP address 135 of the received data packet 120. The destination IP address 135 is the IP address of the intended destination of the data packet 120, which in this case is an IP address of the computer network 300 or one of the assets 310, 312, 314, 316, 320 associated with the computer network 300, given as the device 110 is aiming to access the computer network 300 or the assets 310, 312, 314, 316, 320 maintained by the computer network 300.

The data packet 120 also has an associated ASN. An autonomous system is a collection of connected IP routing addresses under the control of one or more network operators on behalf of a single administrative entity or domain. The device 110, for example, may be a part of an autonomous system. Therefore, each source IP address received by the threat protection system 200, including the source IP address 130 and any other source IP addresses of further received data packets, will have an associated ASN. Even if different source IP addresses are associated with the same autonomous system, they will have the same ASN.

As shown in Figure 1, the threat protection server 210 maintains the local database 230. As shown in Figure 2, the local database 230 is an ASN database 230 that stores a list of ASNs known to the threat protection system 200 to be associated with data packets already received by the computer network 300 and/or any other computer network protected by the threat protection system 200. An example 235 of the list of ASNs stored within the database 230 is shown in Figure 2. The list of ASNs stored in the ASN database 230 are related to data packets received from devices and/or networks that had previously accessed the computer network 300 and/or other computer networks. As mentioned in relation to Figure 1, the ASN database 230 is local to the threat protection system 200, as it is maintained by the threat protection server 210.

The external database 240 is also a database that stores ASNs. The ASN database 240 is a public database maintained externally to the threat protection server 210. The ASN database 240 is maintained by an entity other than the threat protection server 210. An example 245 of the data stored within the external database 240 is shown in Figure 2. However, the threat protection server 210 is able to access the ASN database 240 in determining whether to block any incoming data packets 120 from accessing the computer network 300. The ASN database 240 includes a record of all known ASNs across the internet, and each different source IP address associated with each ASN.

As device 110 attempts to access the computer network 300, the data packet 120 is received by the router 220 of the threat protection system 200. The router 220 routes the incoming data packet 120 to the threat protection server 210.

The threat protection server 210 receives the data packet 120 from the router 220. The data packet 120 that is received includes its source IP address 130 and its destination IP address 135. Therefore, the threat protection server 210 is able to determine the source IP address 130 and the destination IP address 135 of the data packet 120. The threat protection server 210 then proceeds to determine an ASN associated with the source IP address 130 for the received data packet 120, by determining an ASN stored in the external database 240 in relation to the received source IP address 130.

Once the threat protection server 210 has determined the ASN associated with the incoming data packet 120, it determines whether the ASN is the same ASN as any of the ASNs stored in the list of ASNs in the internal ASN database 230, that are known to have previously accessed the computer network 300.

If it is determined that the ASN of the received data packet 120 matched an ASN stored in the list of known ASNs, the threat protection server 210 proceeds to send the data packet 120 to its intended destination IP address 135 within the computer network 300. However, if the ASN of the data packet 120 is not in the database 230, the threat protection server 210 blocks the data packet 120 from accessing the computer network 300. In blocking the data packet 120 from accessing the computer network 300, the threat protection server 210 prevents the data packet 120 from being sent to its destination IP address 135 within the computer network 300.

Prior to receiving and blocking the data packet 110, the threat protection server generates the list of ASNs stored in the local ASN database 230 based on earlier data packets that accessed the computer network 300 and did not cause a network security threat to the computer network 300, at a time prior to the receiving of the data packet 120 as described above in relation to Figure 2.

An earlier data packet, at an earlier point in time prior to receiving the data packet 120, is sent from a device to the router 220. The router routes the data packet to the threat protection server 210. The device may be any device, including device 110. The threat protection server 220 proceeds to send to the data packet to its intended destination IP address within computer network 300.

The threat protection server 210 then determines whether the earlier data packet caused a network security threat to the computer network 300. If the data packet did not cause a network security threat, the threat detection server 210 determines that the data packet 120 is safe, and thus determines that its associated ASN is safe. The threat protection server 210 therefore stores the ASN associated with the earlier received data packet in the local ASN database 230, such that any later received data packet, e.g., data packet 120, received by the threat protection server 210 may be checked against the ASN known to previously be safely and securely received by the computer network 300.

Prior to receiving the receiving the data packet 120 as shown in Figure 2, the threat protection server 210 further receives any number of earlier data packets and sends each of these data packets to its destination IP address within the computer network 300. Within a predetermined period of time, herein referred to as the learning period, the threat protection server 210 allows any received data packets to access the computer network, assuming that the data packets are not associated with a potential network security threat. The threat protection server 210 stores each of these received data packets in the list of ASNs in the local ASN database 230.

Further, within this learning period, the threat protection server 210 is able to determine a baseline distribution of all ASNs associated with the data packets received by the computer network 300. Therefore, once the data packet 120, as shown in Figure 2, is received by the threat protection server 210, the threat protection server 210 determines if the ASN associated with the data packet 120 is an anomaly with respect to the baseline distribution of ASNs received by the compute network 300.

If the ASN of the data packet 120 is an anomaly compared to the baseline distribution, the threat protection server 210 proceeds to block the data packet 120 being sent to the computer network 300. However, if the ASN of the data packet 120 is within a predetermined threshold of the baseline distribution, it is not treated as an anomaly by the threat protection server 210, which proceeds to send the data packet 120 to its intended destination IP address 135.

The threat protection server 210 also stores a further list of ASNs (not shown) in the local ASN database 230 of ASNs known by the threat protection server 210 to be malicious and fraudulent. This may include, for example, ASNs that have previously caused a network security threat at the computer network 300. To generate a sufficient and complete malicious ASN list in ASN database 230, the threat protection server 210 attempts to attract malicious data into accessing a computer network in order to determine further IP addresses associated with network security threats.

The threat protection server 210 maintains imitation web applications (which may be referred to as fake web applications), that imitate a real web application, for example a web application maintained by the computer network 300. The imitation web applications are designed to attract a network security threat originating from a malicious IP address. The imitation web applications are not maintained by the computer network 300, and in accessing the imitation web application a malicious device or actor is unable to access the computer network 300.

For example, a device, such as device 110, attempts to access an imitation web application of a real web application maintained by the computer network 300, in order to cause a network security threat at the computer network 300. A data packet is therefore received from the device 110 at the threat protection server 210. The threat protection server 210 determines that the data packet was received from a device 110 attempting to cause a network security threat, to what appeared to the device as being a web application maintained by the computer network 300. However, given as the data packet was received only by the threat protection server 210 maintaining the imitation web application, the data packet is unable to cause a network security threat at the real computer network 300.

The threat protection server 210 receives any number of additional data packets originating from source IP addresses accessing the imitation web applications that it maintains. If the data packets accessing the imitation web applications, then attempt to cause a network security threat, the threat protection server 210 is able to determine that an ASN associated with said data packet is malicious. The threat protection server 210 proceeds to store in the list of ASNs in the ASN database 230, any of the ASNs of these data packets attempting to cause a network security threat to the fake web application.

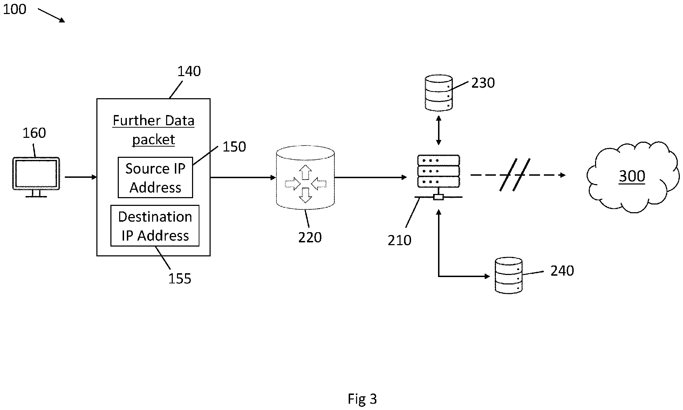

Figure 3 shows a schematic block diagram of the system 100, as shown in Figure 1, for preventing a security threat in the computing network 300, based on an autonomous system number of an incoming data packet. A further data packet 140 is received at the router 220 of the threat protection system 200. The further data packet 140 is sent to the router 220 from a device 160. The device 160 is different to the device 110 shown in Figure 2 in which the first data packet 120 is received from. The router 220 routes the further data packet 140 to the threat protection server 210. Once the threat protection server 210 receives the further data packet 140, it determines an ASN associated with a source IP address 150 of the further data packet 140.

The threat protection server 210 determines the ASN of the further data packet 140 by querying the public ASN database 240. The threat protection server 210 determines if an ASN has been stored in association with the source IP address 150 of the further data packet 140 in the external ASN database 240. If this is the case, the threat protection server 210 then determines that this ASN is the ASN of the further data packet 140.

The threat protection server 210 proceeds to compare the ASN of the further data packet 140 to the list of ASNs (including the first detected data packet 120 shown in Figure 2), stored in the local ASN database 230. If the ASNs match (and are therefore the same number) the threat protection server 210 determines that the further data packet 140, regardless of a device or network in which it was received from and its source IP address 150, is associated with an ASN that is previously known by the threat protection server 210 and has previously accessed the computer network 300. For example, the ASN of the further data packet 140 may be the same ASN as the initially detected data packet 120 that was sent to the computer network 300 as described in relation to Figure 2.

The threat protection server 120 therefore proceeds to send the further data packet 140 to its destination IP address 155 within the computer network 300, based on the fact its source IP address 150 has the same ASN as the ASNs stored in local ASN database 230, such as the previously detected and blocked data packet 120 shown in Figure 2.

In this way, the threat protection server 210 has only had to review the ASN of the further received data packet 140, rather than having to review whether its source IP address 150 was previously known, or not known, to be involved in a network security threat. Therefore, the threat protection server 210 only has to use an ASN of an incoming data packet to determine whether the data packet is associated with malicious network activity. Given as many different IP addresses may have the same ASN, the system and methods described herein provide an efficient way for the threat protection server 210 to easily block large amounts of incoming data packets from different IP addresses without having to check whether each individual IP address is stored in the IP address database 230 (and is therefore known to the threat protection server 210 as being malicious).

This method is particularly useful in blocking denial of service attacks, for example, where many different data packets may be received by the threat protection server 210 at once, with each data packet originating from a different source IP address. Therefore, in looking at the ASNs of the incoming data packets rather than every individual source IP address, the threat protection server 210 is able to efficiently and accurately detect any malicious data packets received with ASNs not previously stored in the ASN database 230, and as such block said data packets and preventing any network security threats.

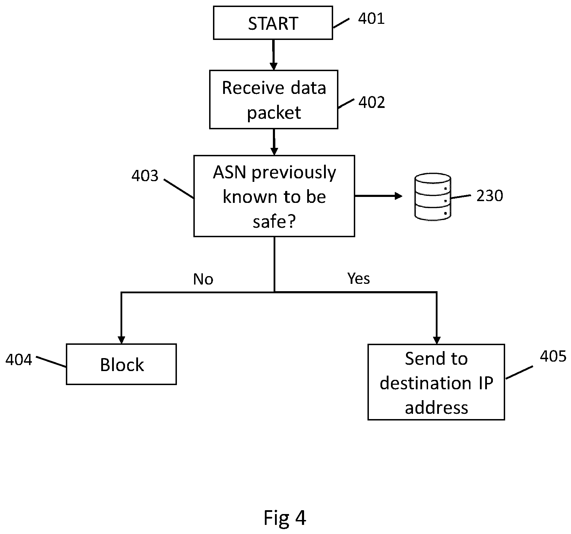

Further, by blocking received data packets based on their associated ASNs, the threat protection server 210 is able to more accurately block malicious data from accessing the computer network 300 compared to relying solely on any internally maintained database storing known malicious IP addresses . By using the ASN database 240, the threat protection server 210 is able to block a received data packet with a previously unknown ASN, and does not have to determine separately, whether the source IP address associated with said ASN is known or unknown to the threat protection server 210.. Figure 4 shows a method sequence diagram for preventing a security threat in the computing network 300, as shown in Figures 1 and 3. The method sequence steps shown in Figure 4 are performed by the threat protection server 210. The method starts at step 401.

At step 402, a data packet is received by the threat protection server 210. The data packet received may be the data packet 120 shown in Figure 2 or it may be any other received data packet. At step 403, the threat protection server 210 determines if the received data packet is previously known to have accessed the computer network 300. This step involves determining whether an ASN associated with the data packet is stored in the ASN database 230. The ASN database 230, as shown in Figures 1 to 4, includes a list of ASNs in which earlier data packet(s) were associated with and caused a network security threat to computer network 300.

If the data packet is unknown by the threat protection server 210 and has not been stored in the ASN database 230, the method continues to step 404.

At step 404, if the ASN of the received data packet is not known by the threat protection server 210 to be associated with a data packet received by the computer network 300 (and has therefore already been stored in the ASN database 230), the threat protection server 210 proceeds to block the data packet from being sent to its intended destination IP address within the computer network 300.

Alternatively, to step 405, if the received ASN of the data packet is known to the threat protection server 210 (and is therefore already stored in the ASN database 230), the threat protection server 210 sends the data packet to its destination IP address.

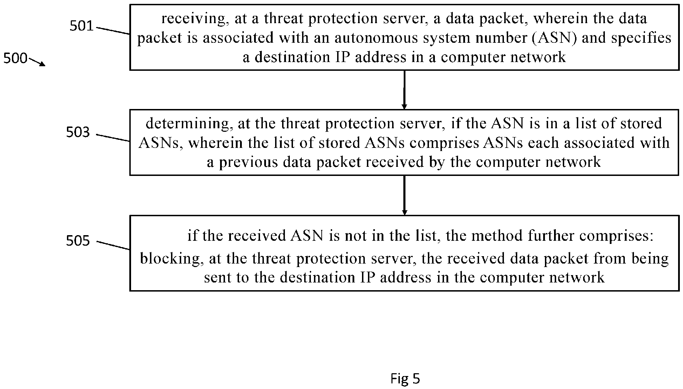

Figure 5 shows a flow diagram of a computer implemented method 500 for preventing a security threat in a computing network.

At step 501 the method involves, receiving, at a threat protection server, a data packet, wherein the data packet is associated with an autonomous system number (ASN) and specifies a destination IP address in a computer network.

At step 503 the method involves, determining, at the threat protection server, if the ASN is in a list of stored ASNs, wherein the list of stored ASNs comprises ASNs each associated with a previous data packet received by the computer network.

At step 505 the method involves, if the received ASN is not in the list, the method further comprises: blocking, at the threat protection server, the received data packet from being sent to the destination IP address in the computer network.

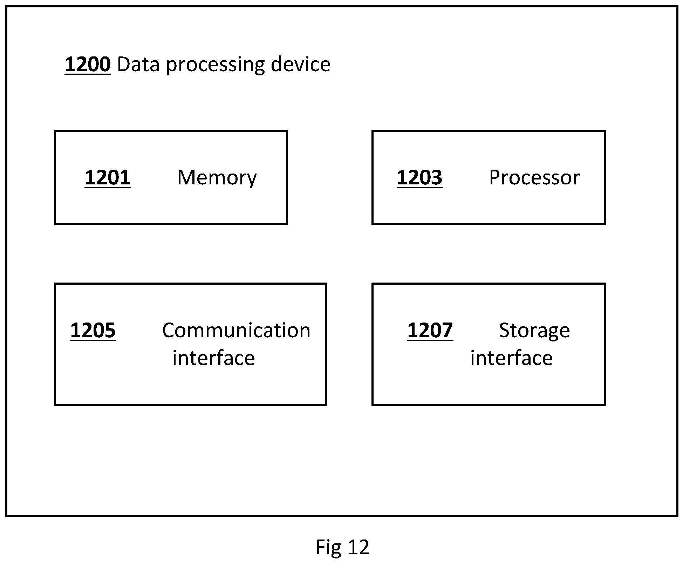

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device. Similarly, any steps of any of the methods described herein may be performed by data processing devices. By way of example, Figure 12 shows, in schematic form, a data processing device 1200 that is suitable for use within the system 100 shown in Figures 1 to 5.

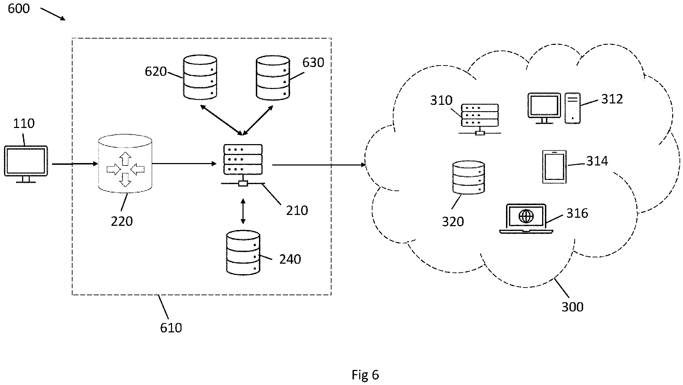

Figures 6 to 11 show an alternative embodiment to the system shown in Figures 1 to 5 for preventing a security threat in a computer network. By way of example, the device 110, the data packet 120, the source IP address 130, the destination IP address 135, the router 220, the threat protection server 210, the external ASN database 240 and the computer network 300 are all the same in the alternative embodiment of Figures 6 to 11, to those described above in relation to the embodiment of Figures 1 to 5. The alternative embodiment shown in Figures 6 to 11 employs alternative local databases 610 and 620 maintained by the threat protection server 210 instead of the single internal ASN database 230 shown in Figures 1 to 4 and described in relation to Figures 1 to 5.

Figure 6 shows a schematic diagram of a communication system 600 for preventing a security threat in the computing network 300, in accordance with an alternative embodiment of the present invention. The system 100 includes the threat protection system 200 and the computer network 300.

The threat protection system 200 includes the threat protection server 210, the network router 220 and the external ASN database 240. However, instead of the local ASN database 230, the threat protection system includes local ASN database 630 and local source IP address database 620.

The system 600 also includes the computer network 300 in communication with the threat protection server 210. As described above in relation to Figure 1, the computer network 300 includes the servers 310, the databases 320, and the plurality of devices such as the computers 312, the mobile phone devices 314, the laptops 316 and any other device connected to the computer network 300. The servers 310 of the computer network 300 also maintain one or more web applications and/or web pages across any number of websites. The computer network 300 includes the above assets which are to be protected by the threat protection server 210.

A device 110 external to the computer network 300 aims to access the computer network 300. The device 110 may be an individual device accessing the computer network 300 or it may be an external network of devices accessing the computer network 300. The device 110 accesses the computer network 300 through a web application ran by the servers 310 of the computer network 300. In this way, the device 110 aims to access the computer network 300 as internet traffic accessing the web application maintained by the computer network 300. As the device accesses the web application, data packets are sent from the device to the computer network maintaining the web application. The data packets being sent and received is what constitutes the internet traffic trying to access the web application.

As shown in Figure 6, the system 600 includes a threat protection system 610, which first receives the internet traffic from the device 110 trying to access the computer network 300 before it is permitted to access the network 300. As will be described in detail below, the threat protection system 610 determines whether the internet traffic received is sent from a device 110 with malicious intent, for example from a fraudster accessing a web application in order to access private data stored by devices of computer network 300. If it is determined that the internet traffic accessing the computer network 300 is from a malicious source, the threat protection system 610 proceeds to block the traffic from accessing the computer network 300. In this way, the threat protection system 610 protects the devices 312, 314, 316, servers 310, and databases 320 of the computer network 300 against network security threats and attacks.

The threat protection system 610 protects the computer network 300 from network security threats such as a denial-of-service attack, or a distributed denial-of-service attack or a phishing attack or a malware attack.

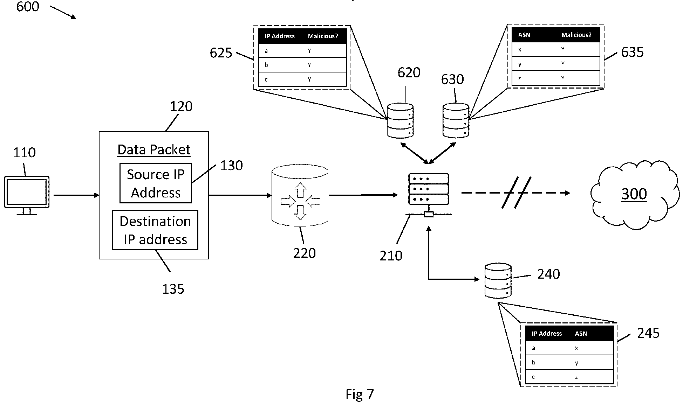

Figure 7 shows a schematic block diagram of the system 600 shown in Figure 6 for preventing a security threat in the computer network 300, based on a source IP address of an incoming data packet. As described above in relation to Figure 6, the device 110 attempts to access the computer network 300 via an asset, such as a web application, maintained by the computer network 300.

In attempting to access the computer network 300, a data packet 120 is sent from the device 110 to the router 220 of the threat protection system 610. The data packet 120 indicates a source IP address 130 and a destination IP address 135 of the internet traffic originating from the device 110. Any device or network connected to the internet has an internet protocol (IP) address. An IP address is a unique identifying number assigned to every device and/or network. Therefore, the data packet 120 received at the router 220 indicates the source IP address 130 of a source of the data packet 120, which in this case is the IP address of the device 110.

The data packet 120 indicates a destination IP address 135 of the received data packet 120. The destination IP address 135 is the IP address of the intended destination of the data packet 120, which in this case is an IP address of the computer network 300 or one of the assets 310, 312, 314, 316, 320 associated with the computer network 300, given as the device 110 is aiming to access the computer network 300 or the assets 310, 312, 314, 316, 320 maintained by the computer network 300.

As shown in Figure 6, the threat protection server 210 maintains the local database 620. As shown in Figure 7, the local database 620 is an IP address database 620 that stores a list of IP address known to the threat protection system 6100 to be malicious and to have previously being involved with a network security threat to the computer network 300 and/or any other computer network protected by the threat protection system 610. An example 625 of the list of IP addresses stored within the database 620 is shown in Figure 2. The list of malicious source IP addresses stored in the IP address database 620 are related to data packets received from devices and/or networks that had previously accessed the computer network 300 and/or other computer networks. As mentioned in relation to Figure 6, the IP address database 620 is local to the threat protection system 610, as it is maintained by the threat protection server 210 (as well as the other local database 630).

As explained above, each data packet received by the threat protection server 210 includes a source IP address. As shown in Figure 7, this is the data packet 110 and its source IP address 130. However, as explained above in relation to Figures 1 to 5, the source IP address 130 also has an associated ASN.

The threat protection server 610 includes the ASN database 240 that is a public database maintained externally to the threat protection server 210, as shown in Figures 1 to 3.

As device 110 attempts to access the computer network 300, the data packet 120 is received by the router 220 of the threat protection system 200. The router 220 routes the incoming data packet 120 to the threat protection server 210.

The threat protection server 210 receives the data packet 120 from the router 220. The data packet 120 that is received includes its source IP address 130 and its destination IP address 135. Therefore, the threat protection server 210 is able to determine the source IP address 130 and the destination IP address 135 of the data packet 120. The threat protection server 210 determines whether the source IP address 130 is the same IP address as any of the IP addresses stored in the list of IP address of the IP address database 620, that are known to have previously caused a network security threat.

If it is determined that the source IP address of received data packet 120 matches an IP address stored in the list of known malicious IP addresses, the threat protection server 210 proceeds to block the device 110 from accessing the computer network 300, for example, by blocking the device 110 from accessing a web application maintained by the computer network 300. In blocking the device 110 from accessing the computer network 300, the threat protection server 210 prevents the data packet 120, from being sent to its destination IP address 135 within the computer network 300.

Prior to receiving and blocking the data packet 110, the threat protection server generates the list of IP addresses stored in the IP address database 620 based on earlier data packets that accessed the computer network 300 and caused a network security threat to the computer network 300 at a time prior to the blocking process described above in relation to Figure 7.

An earlier data packet, at an earlier point in time prior to receiving the data packet 120, is sent from a device to the router 220. The router routes the data packet to the threat protection server 210. The device may be any device, including device 110. The threat protection server 220 determines whether the source IP address of the earlier data packet is stored in the IP address database 230. If the source IP address is stored in the database 230, as explained above, the threat protection server proceeds to block the data packet from being sent to the computer network 300. If the source IP address of the earlier data packet is not in the IP address database 620, the threat protection server 210 proceeds to send to the data packet to its intended destination IP address within computer network 300.

However, if the device sent the earlier data packet with malicious intent, the earlier data packet may proceed to cause a network security threat and/or attack of the network 300. If this is the case, the threat protection server 210 adds the source IP address of the earlier data packet into the list of IP addresses stored in the IP address database 620. In this way, the list of known malicious IP addresses is generated and stored in the database 620 and can be used for data packets received at a later point in time, such as data packet 120.

Further, to generate a sufficient and complete malicious IP address list in IP address database 620, the threat protection server 210 also attempts to attract malicious data into accessing a computer network in order to determine further IP addresses associated with network security threats.

The threat protection server 210 maintains imitation web applications (which may be referred to as fake web applications), that imitate a real web application, for example a web application maintained by the computer network 300. The imitation web application may be the same as those described in relation to the system 100 of Figures 1 to 5. The imitation web applications are designed to attract a network security threat originating from a malicious IP address. The imitation web applications are not maintained by the computer network 300, and in accessing the imitation web application a malicious device or actor is unable to access the computer network 300.

For example, a device, such as device 110, attempts to access an imitation web application of a real web application maintained by the computer network 300, in order to cause a network security threat at the computer network 300. A data packet is therefore received from the device 110 at the threat protection server 210. The threat protection server 210 determines that the data packet was received from a device 110 attempting to cause a network security threat, to what appeared to the device as being a web application maintained by the computer network 300. However, given as the data packet was received only by the threat protection server 210 maintaining the imitation web application, the data packet is unable to cause a network security threat at the real computer network 300.

The threat protection server 210 receives any number of additional data packets originating from source IP addresses accessing the imitation web applications that it maintains. If the data packets accessing the imitation web applications, then attempt to cause a network security threat, the threat protection server 210 is able to determine that the source IP address associated with said data packet is malicious. The threat protection server 210 proceeds to store in the list of IP addresses in the IP address database 620, any of these source IP address attempting to cause a network security threat to the fake web application.

As shown in Figure 7, after receiving the data packet 120 and determining that the source IP address 130 of the data packet 120 is stored in the IP address database 230, the threat protection server 210 further determines, from the external ASN database 240, an ASN associated with the source IP address 130 of the received data packet 120. The threat protection server 210 queries the external ASN database 240 to determine if the ASN database 240 includes a record of the source IP address 130, and then determines the ASN number stored in the database 240 in association with the source IP address 130. In this way, the threat protection server 210 has determined the ASN associated with the source IP address 135, which has been matched to a known malicious IP address stored in the IP address database 620.

The threat protection server 210 stores the determined ASN in the second local database 630 that it maintains. The database 630 is a local ASN database that the threat protection server 210 uses to store a list of determined ASNs relating to received data packets with malicious source IP addresses. An example 635 of the data stored within local ASN database 630 is shown in Figure 2. With this determined ASN, now stored in the local ASN database630, the threat protection server 210 is able to efficiently block any further received data packets with source IP addresses associated with the same ASN, as will be described below.

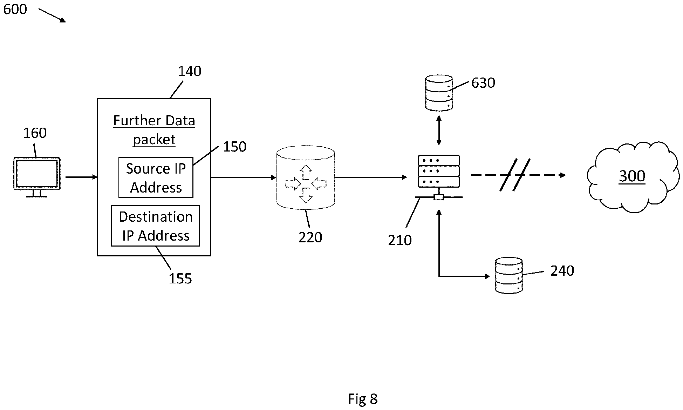

Figure 8 shows a schematic block diagram of the system 600, as shown in Figures 6 and 7, for preventing a security threat in the computing network 300, based on an autonomous system number of an incoming data packet. A further data packet 140 is received at the router 220 of the threat protection system 200. The further data packet 140 is sent to the router 220 from a device 160. The device 160 is different to the device 110 shown in Figure 7 in which the first data packet 120 is received from. The router 220 routes the further data packet 140 to the threat protection server 210. Once the threat protection server 210 receives the further data packet 140, it determines an ASN associated with a source IP address 150 of the further data packet 140.

The threat protection server 210 determines the ASN of the further data packet 140 by querying the public ASN database 240. The threat protection server 210 determines if an ASN has been stored in association with the source IP address 150 of the further data packet 140 in the external ASN database 240. If this is the case, the threat protection server 210 then determines that this ASN is the ASN of the further data packet 140.

The threat protection server 210 proceeds to compare the ASN of the further data packet 140 to the ASNs stored in the local ASN database 630, which includes, for example, the (first detected) data packet 120 shown in Figure 7,. If the ASNs match (and are therefore the same number) the threat protection server 210 determines that the further data packet 140, regardless of a device or network in which it was received from and its source IP address 150, is associated with the initially detected and blocked data packet 120.

The threat protection server 120 therefore proceeds to block the further data packet 140 from being sent to its destination IP address 155 within the computer network 300, based on the fact its source IP address 150 has the same ASN as an ASN previously stored in the ASN database 630, such as the ASN of the previously detected and blocked data packet 120 shown in Figure 7.

In this way, the threat protection server 210 has only had to review the ASN of the further received data packet 140, rather than having to review whether its source IP address 150 was previously known to be involved in a network security threat. Therefore, the threat protection server 210 only has to use an ASN of an incoming data packet to determine whether the data packet is associated with malicious network activity. Given as many different IP addresses may have the same ASN, the system and methods described herein provide an efficient way for the threat protection server 210 to easily block large amounts of incoming data packets from different IP addresses without having to check whether each individual IP address is stored in the IP address database 230 (and is therefore known to the threat protection server 210 as being malicious).

Further, by blocking received data packets based on their associated ASNs, the threat protection server 210 is able to more accurately block malicious data from accessing the computer network 300 compared to relying solely on the internally maintained IP address database 230. By using the ASN database 240, the threat protection server 210 is able to block a received data packet with a previously unknown source IP address

(and therefore said IP address would not have been stored in the IP address database 230), based on the source IP address having an ASN that matches an ASN stored in the local ASN database 260.

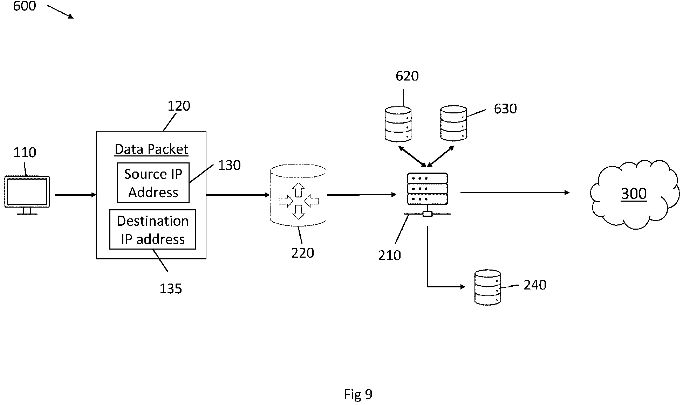

If the received data packet 120, 140 has a source IP address not stored in the list of the IP address database 620, the threat protection server 210 allows the data packet 120, 140 to access the computer network 300 and thus proceeds to send the data packet 120, 140 to its intended destination IP address 135, 145. However, the threat protection server 210 further determines if the received data packet is associated with a source IP address that has previously accessed the computing network 300 and is known to be safe and secure i.e., has not caused a network security threat. Figure 9 shows a schematic block diagram of the system 600 shown in Figures 6 to 8 for preventing a security threat in the computing network 300, when the received data packet is from a source IP address known by the threat protection server to be safe.

The data packet 120 is received at the router 220 from device 110. By way of example, Figure 9 shows the same received data packet 120 and device 110 as shown in Figure 7, only as if the received data packet 120 is determined not to be malicious by the threat protection server 210. However, the data packet sent from the device shown in Figure 9 may be a different device and/or data packet altogether.

The IP address database 620 stores a list of IP addresses known by the threat protection server 210 to be safe. For example, this may be due to data packets consistently received from the same source IP address and have never caused a network security threat, or alternatively the threat protection provider may have already verified the source IP address as being secure.

The router 220 routes the data packet 110 to the threat protection server 210. The threat protection server 210 determines if the source IP address 130 is stored in the list of safe IP addresses in the IP address database 620. If the source IP address 130 is stored in the list of safe IP addresses, the threat protection server 210 proceeds to send the data packet 120 to its destination IP address 135 within the computer network 300.

Further, the threat protection server 210 stores in the local ASN database 630 a list of ASNs known by the threat protection server 210 to be safe. For example, this may be due to data packets consistently received from the same set of source IP addresses with the same ASN and have never caused a network security threat, or alternatively the threat protection provider may have already verified that data packets from source IP addresses with the same ASN as being secure.

Therefore, alternatively or in addition to determining if the source IP address 130 is stored in the list of safe IP addresses in the IP address database 620, the threat protection server 210 determines the ASN of the source IP address using the external ASN database 630, to then determine if the ASN associated with the received data packet 120 is stored in the list of safe ASNs in the local ASN database 630. If the ASN is stored in the list of safe ASNs, the threat protection server 210 proceeds to send the data packet 120 to its destination IP address 135 within the computer network 300.

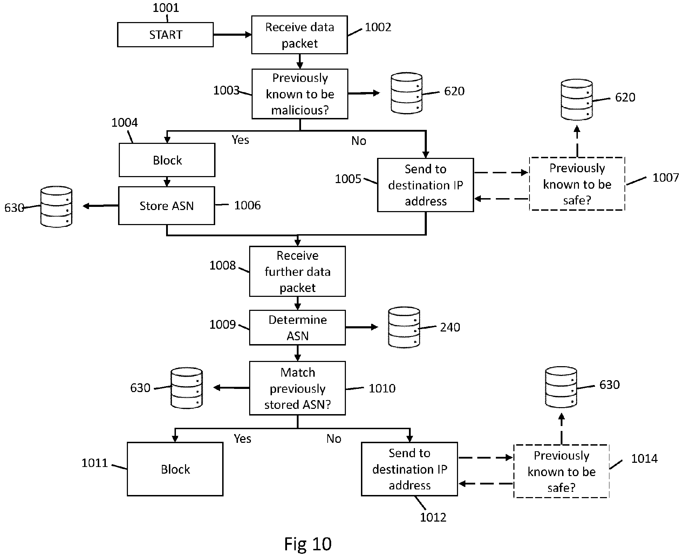

Figure 10 shows a method sequence diagram for preventing a security threat in the computing network 300, as shown in Figures 6 to 9. The method sequence steps shown in Figure 10 are performed by the threat protection server 210. The method starts at step 1001.

At step 1002, a data packet is received by the threat protection server 210. The data packet received may be the data packet 120 shown in Figure 7 or it may be any other received data packet. At step 1003, the threat protection server 210 determines if the received data packet is known to be malicious. This step involves determining whether a source IP address of the data packet is stored in the IP address database 620. The IP address database 620, as shown in Figures 6 to 9, includes the list of IP addresses in which earlier data packet(s) were received from and caused a network security threat to computer network 300.

If the data packet is known by the threat protection server 210 and has therefore already been stored in the IP address database 620, the method continues to steps 1004 and 1006.

At step 1004, if the source IP address of the received data packet is known by the threat protection server 210 to be associated with a previous network security threat (and has therefore already been stored in the IP address database 620), the threat protection server 210 proceeds to block the data packet from being sent to its intended destination IP address within the computer network 300. At step 1006, the threat protection server 210 determines a publicly available ASN associated with the data packet's source IP address using external ASN database 240 and stores the determined ASN in the local ASN database 630 for future use.

Alternatively, to steps 1004 and 1006, if the received source IP address of the data packet is unknown to the threat protection server 210 (and is therefore not stored in the IP address database 620), at step 1005, the threat protection server 210 sends the data packet to its destination IP address. The threat protection server 210 may also optionally perform step 1007. At step 1007 the threat protection server 210 first determines whether the source IP address of the data packet is stored in a list of IP addresses in IP address database 620 known by the threat protection server 210 to be safe and secure and to not be associated with malicious activity. Step 1007 may occur before allowing the data packet to access the computer network 300 (i.e., send the data packet to its destination IP address at step 1005).

At a later point in time with respect to receiving the data packet, the method proceeds to step 1008. At step 1008, the threat protection server 210 receives a further data packet, for example data packet 140 shown in Figure 8. Using the external ASN database 240, the threat protection server 210 determines an ASN associated with the source IP address of the further data packet.

At step 1009, the threat protection server 210 determines whether the ASN matches an ASN previously stored in the local ASN database 630, such as the ASN associated with the source IP of the first data packet (received at step 1002).

At step 1011, if the ASN of the further received data packet matches an ASN stored in the local ASN database 630, the threat protection server 210 blocks the further data packet from being sent to its destination IP address. Step 1012 occurs, if alternatively, the ASN of the further received data packet does not match an ASN stored in the local ASN database 630, and the threat protection server 210 therefore sends the further data packet to its destination IP address.

Similar to step 1007, the method may additionally include step 1014 prior to performing step 1012. At step 1014 the threat protection server 210 determines whether the source IP address of the further data packet is stored in the list of IP addresses in IP address database 620 known by the threat protection server 210 to be safe and secure and to not be associated with malicious activity, before sending the data packet to its destination IP address at step 1005). The method ends after either of step 1011 or step 1012.

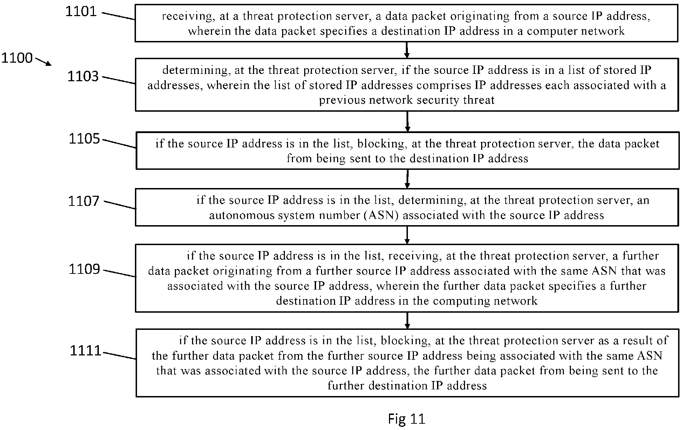

Figure 11 shows a flow diagram of a computer implemented method 1100 for preventing a security threat in a computing network.

At step 1101 the method involves, receiving, at a threat protection server, a data packet originating from a source IP address, wherein the data packet specifies a destination IP address in a computer network.

At step 1103 the method involves, determining, at the threat protection server, if the source IP address is in a list of stored IP addresses, wherein the list of stored IP addresses comprises IP addresses each associated with a previous network security threat.

At step 1105 the method involves, if the source IP address is in the list, blocking, at the threat protection server, the data packet from being sent to the destination IP address.

At step 1107 the method involves, if the source IP address is in the list, determining, at the threat protection server, an autonomous system number (ASN) associated with the source IP address.

At step 1109 the method involves, if the source IP address is in the list, receiving, at the threat protection server, a further data packet originating from a further source IP address associated with the same ASN that was associated with the source IP address, wherein the further data packet specifies a further destination IP address in the computing network.

At step 1111 the method involves, if the source IP address is in the list, blocking, at the threat protection server, as a result of the further data packet from the further source IP address being associated with the same ASN that was associated with the source IP address, the further data packet from being sent to the further destination IP address.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device. Similarly, any steps of any of the methods described herein may be performed by data processing devices.

By way of example, Figure 12 shows, in schematic form, a data processing device 1200 that is suitable for performing the functions of the router 220 and the threat protection server 210 of the threat protection system 200 of Figures 1 to 5 or of the threat protection system 610 of Figures 6 to 11. The data processing device 1200 is also suitable for performing functions of the devices and servers 310, 312, 314, 316, 320 of the computer network 300, or any other entity. The data processing device 1200 may automatically perform any of the methods described herein.

Data processing device 1200 includes a processor 1203 for executing instructions. Instructions may be stored in a memory 1201. Processor 1203 may include one or more processing units (e.g., in a multi-core configuration) for executing instructions. The instructions may be executed within a variety of different operating systems on the data processing device 1200, such as UNIX, LINUX, Microsoft Windows^{®}, etc. More specifically, the instructions may cause various data manipulations on data stored in memory 1201 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 1203 is operatively coupled to a communication interface 1205 such that data processing device 1200 can communicate with a remote device, such as another data processing device of the system. For example, communication interface 1205 may receive communications from another member of the system.

Processor 1203 may also be communicatively coupled to a storage device such as a database, depending on the function of data processing device 1200 within the context of the system. The storage device is any computer-operated hardware suitable for storing and/or retrieving data, where in the case of a secure storage medium the data is stored and retrieved securely.

The storage database may, for example, include the local ASN database 230 of Figures 1 to 5 or alternatively, it may include the local IP address database 620 and the local ASN database 630 of Figures 6 to 11. In either case, the storage database can be external to data processing device 1200 and located remotely, such as external ASN database 240. Alternatively, it can be integrated in data processing device 1200. For example, data processing device 1200 may include memory 1201 as one or more hard disk drives acting as a storage database. Alternatively, where the storage database is external to data processing device 1200, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 1203 can be operatively coupled to the storage device (storage database) via a storage interface 1207. Storage interface 1207 is any component capable of providing processor 1203 with access to the storage device. Storage interface 1207 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 803 with access to the storage device.

Memory 1201 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

As shown in Figures 1 to 3 and Figures 6 to 9, the devices 110, 140 in which data packets 120, 140 are received from are singular devices. However, in other arrangements the data packets 140, may be received from a computer network (that is not computer network 300).

Although it is described above that as an example, data packets 140, 160 are received by the threat protection server 210 as the devices 110, 160 are attempting access a web application maintained by the computer network 300, in other arrangement the data packets may be received by any form, such as accessing the computer network 300 by sending data to the devices 310, 312, 314, 316, 320 maintained by the computer network 300.

Although it is shown in Figures 6, 7 and 9 that the local ASN database 630 is a separate database to the IP address database 620, in other arrangements they may be the same local database.

The list of ASNs stored in the local ASN database 230 of Figures 1 to 5, is described above as containing ASNs relating to data packets that have already accessed the computer network 300. However, additionally, or alternatively, this may also include ASNs that have previously safely accessed other computer networks (and not solely computer network 300) and not caused a network security threat.

As described in relation to Figure 7, a source IP address of an earlier data packet that caused a network security threat is determined and stored in the IP address database. However, in addition to the source IP address, an ASN of the earlier data packet that is received may also be determined and stored in the local ASN database 620.

The list of IP addresses stored in the IP address database 620 of Figures 6 to 11, is described above as containing source IP addresses of malicious devices and/or networks that accessed the computer network 300. However, additionally, or alternatively, this may also include source IP address that have previously accessed other computer networks (and not solely computer network 300) and caused a network security threat.

As described above, further data packet 140 shown in Figures 3 and 8 is received from a different device 160 to the deice 110 form which data packet 110 is received. However, in other arrangements the further data packet may be received from any device, including device 110 shown in Figures 2 and 7. As shown in Figures 1 to 5 and described above, the further data packet 140 will be blocked based on whether its source IP address 150 has an ASN that is stored in the local ASN database 230, and is thus known by the threat protection server 210 as having already accessed the computer network 300, and not solely on its source IP address. Therefore, it is to be understood that the device 160, whether it is the same or a different device to device 110 shown in Figure 2 (and thus whether it is the same or a different source IP address), is not directly related to whether the further data packet 140 will be blocked or not by the threat protection server 120.

Similarly, in the case of the embodiment of Figures 6 to 11, the further data packet 140 will be blocked based on whether its source IP address 150 is associated with an ASN associated with other known malicious IP addresses, and not solely on whether its source IP address 150 is stored within the IP address database 620. Therefore, it is to be understood that the device 160, whether it is the same or a different device to device 110 shown in Figure 7 (and thus whether it is the same or a different source IP address), is not directly related to whether the further data packet 140 will be blocked or not by the threat protection server 120.

## Claims

1. A computer implemented method for preventing a security threat in a computing network, the method comprising:
receiving, at a threat protection server, a data packet, wherein the data packet is associated with an autonomous system number (ASN) and specifies a destination IP address in a computer network;
determining, at the threat protection server, if the ASN is in a list of stored ASNs, wherein the list of stored ASNs comprises ASNs each associated with a previous data packet received by the computer network; and
if the received ASN is not in the list, the method further comprises:
blocking, at the threat protection server, the received data packet from being sent to the destination IP address in the computer network.

2. The computer implemented method according to claim 1, wherein the data packet originates from a source IP address, and wherein the method further comprises determining, at the threat protection server, the ASN associated with the source IP address.

3. The computer implemented method according to claim 2, wherein determining, at the threat protection server, the ASN associated with the source IP address comprises:
accessing an ASN database, wherein the ASN database is a public database maintained externally to the threat protection server; and
determining, at the threat protection server, the ASN stored in the ASN database in association with the source IP address.

4. The computer implemented method according to any preceding claim, wherein the data packet associated with the ASN is a second data packet, and the method further comprises:
receiving, at the threat protection server, a first data packet associated with an ASN, wherein the first data packet is received at an earlier point in time to receiving the second data packet;
sending, from the threat protection server, the first data packet to a destination IP address associated with the first data packet;
determining, at the threat protection sever, that the first data packet did not cause a network security threat when received at its destination IP address; and
storing, in the list of stored ASNs, the ASN associated with the first data packet.

5. The computer implemented method according to any preceding claim, further comprising:
receiving, at the threat protection server, a plurality of further data packets, each associated with an ASN, within a predetermined time period, wherein each of the further data packets are received at an earlier point in time to receiving the data packet;
sending, from the threat protection server, each of the further data packets to a destination IP address associated with each further data packet;
determining, at the threat protection server, if any of the data packets sent to their specified destination IP addresses caused a network security threat when received by the computer network; and
storing, in the list of ASNs, an ASN associated with each further data packet that did not cause a network security threat.

6. The computer implemented method according to claim 5, further comprising:
determining, at the threat protection server, a distribution of the received further data packets that did not cause a network security threat; and
wherein the step of determining, at the threat protection server, if the ASN is in the list of stored ASNs comprises:
determining, at the threat protection server, if the ASN associated with the data packet is an anomaly with respect to the distribution of ASNs that were received by the computer network and did not cause a network security threat.

7. The computer implemented method according to any preceding claim, the method further comprising:
determining, at the threat protection server, the ASN associated with the data packet;
comparing, at the threat protection server, the ASN associated with the data packet to each of the ASNs stored in the list of ASNs; and
determining, at the threat protection server, if the ASN associated with the data packet is the same as one of the ASNs stored in the list of ASNs.

8. The computer implemented method according to any preceding claim, wherein the list of stored ASNs is stored in an ASN database maintained by the threat protection server.

9. The computer implemented method to any preceding claim, the method further comprising, if the ASN is in the list of stored ASNs:
sending, from the threat protection server, the data packet to the destination IP address associated with the data packet.

10. The computer implemented method according to any preceding claim, wherein the computer network maintains a web application, and the data packet is received by the threat protection server as the data packet attempts to access the web application.

11. The computer implemented method according to claim 10, wherein the web application is a first web application, and the threat protection server maintains one or more further web applications imitating the first web application, and wherein the method further comprises:
receiving, at the threat protection server, an additional data packet attempting to access the one or more imitation web applications;
determining, at the threat protection server, that the additional data packet is attempting to cause a network security threat to the computer network;
determining, at the threat protection server, an ASN of the additional data packet; and
storing, in an additional list of ASNs, the additional data packet, wherein the additional list of ASNs comprises a list of ASNs each relating to a data packet that has accessed the computer network and was associated with a network security threat.

12. The computer implemented method according to any preceding claim, wherein the data packet is received by the threat protection server from a router associated with the threat protection sever.

13. A threat protection server for preventing a security threat in a computing network, the threat protection server comprising a processor configured to carry out the method of claim 1, or any claim dependent thereon.

14. A non-transitory computer-readable medium comprising instructions which, when executed by a computer, cause the computer to carry out the method of claim 1 or any claim dependent thereon.

15. A computer program product comprising instructions which, when the program is executed by a computer, cause the computer to carry out the method of claim 1 or any claim dependent thereon.
